(19) Europäisches Patentamt
European Patent Office
Office européen des brevets

(11) **EP 3 166 839 B1**

(12) **FASCICULE DE BREVET EUROPEEN**

(45) Date de publication et mention de la délivrance du brevet:
**25.07.2018 Bulletin 2018/30**

(21) Numéro de dépôt: **15733851.8**

(22) Date de dépôt: **19.06.2015**

(51) Int Cl.:
**B62D 6/00** *(2006.01)*   **G01L 5/22** *(2006.01)*

(86) Numéro de dépôt international:
**PCT/FR2015/051630**

(87) Numéro de publication internationale:
**WO 2016/005671 (14.01.2016 Gazette 2016/02)**

(54) **PROCÉDÉ D'ESTIMATION EN TEMPS RÉEL DE L'EFFORT AUX BIELLETTES AU SEIN D'UN MÉCANISME DE DIRECTION ASSISTÉE**

VERFAHREN ZUR ECHTZEITBESTIMMUNG DES KRAFT AUF DIE VERBINDUNGEN IN EINEM SERVOLENKMECHANISMUS

METHOD FOR ESTIMATING IN REAL TIME THE FORCE ON THE LINKS WITHIN A POWER-STEERING MECHANISM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2014 FR 1456607**

(43) Date de publication de la demande:
**17.05.2017 Bulletin 2017/20**

(73) Titulaire: **JTEKT Europe**
**69540 Irigny (FR)**

(72) Inventeurs:
• **BOURDREZ, Sébastien**
  **F-69510 Yzeron (FR)**
• **MOULAIRE, Pascal**
  **F-69890 La Tour de Salvagny (FR)**
• **RAVIER, Christophe**
  **F-69780 Saint Pierre de Chandieu (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**WO-A1-2013/061568   DE-A1-102011 052 881 US-A1- 2009 243 245**

EP 3 166 839 B1

**Description**

La présente invention se rapporte au domaine général des directions assistées équipant des véhicules, et notamment des véhicules automobiles, ainsi qu'aux procédés de gestion de telles directions assistées.

De manière connue, une direction assistée a pour principale fonction d'aider le conducteur à tourner les roues directrices du véhicule, en combinant un effort d'assistance, procuré par un moteur d'assistance, à l'effort conducteur, qui est exercé manuellement par le conducteur sur la direction, généralement au moyen d'un volant de conduite.

La combinaison de l'effort conducteur et de l'effort d'assistance forme un effort d'actionnement qui permet de contrer l'effort résistant exercé par l'environnement du véhicule sur le mécanisme de direction, effort résistant qui est essentiellement causé par le contact entre les pneumatiques et la route.

Cet effort résistant, ramené aux bornes de la direction, c'est-à-dire aux bornes du système formé par le mécanisme de direction, constitue l'effort dit « effort de biellette » (ou « effort aux biellettes »).

En pratique, au sein d'un train roulant directionnel usuel, ledit effort de biellette correspond en effet à la somme algébrique des efforts exercés sur le mécanisme de direction, et plus particulièrement sur la crémaillère de direction, d'une part par la biellette de direction gauche, qui relie la crémaillère à la roue directrice gauche, et d'autre part par la biellette de direction droite, qui relie la crémaillère à la roue directrice droite (l'une desdites biellettes travaillant, à un instant considéré, en traction, tandis que l'autre travaille en compression).

Le document DE 10 2011 052881 A1 divulgue un procédé de détermination d'un effort de biellette qui est représentatif de l'effort qu'exerce, à un instant considéré, l'environnement d'un véhicule sur un mécanisme de direction assistée qui équipe ledit véhicule et qui est manoeuvré au moins par un moteur d'assistance, ledit procédé comprenant une étape de détermination d'effort d'actionnement au cours de laquelle on détermine l'effort d'actionnement qui s'exerce à l'instant considéré sur le mécanisme de direction, tel que ledit effort d'actionnement résulte de l'effort d'assistance exercé par le moteur d'assistance sur le mécanisme de direction, et/ou de l'effort conducteur exercé par le conducteur du véhicule sur ledit mécanisme de direction. Il se trouve que la valeur de l'effort de biellette constitue une donnée particulièrement utile, voire fondamentale, pour caractériser et gérer la direction assistée, car de nombreux problèmes dépendent directement de cette valeur. A titre d'exemple, on pourra notamment citer le problème du dimensionnement du moteur d'assistance.

Or, il est en pratique difficile d'estimer avec précision cet effort de biellette.

Certes, on peut prévoir à cet effet des capteurs d'effort, placés par exemple aux jonctions entre la crémaillère et les biellettes, mais une telle solution tend à augmenter l'encombrement, le poids et la complexité du système de direction assistée, ainsi que son coût.

Selon une autre approche, on peut envisager de procéder, en première approximation, à une estimation de l'effort de biellette en sommant d'une part l'effort conducteur, qui peut être mesuré par exemple au moyen d'un capteur de couple disposé entre le volant de conduite et la colonne de direction, et d'autre part l'effort d'assistance, qui peut être mesuré par exemple au moyen de la consigne appliquée au moteur d'assistance, et en assimilant l'effort de biellette à la somme ainsi obtenue, c'est-à-dire en considérant que l'effort de biellette est égal à l'effort d'actionnement qui s'exerce sur le mécanisme de direction.

Toutefois, les inventeurs ont constaté qu'une telle approximation était relativement grossière et pouvait présenter d'importants écarts avec la valeur véritable de l'effort de biellette.

En particulier, les inventeurs ont découvert que ces écarts apparaissent dès que l'on commence à appliquer un effort d'actionnement, et tendent à s'accentuer lorsque ledit effort d'actionnement augmente, si bien que, en pratique, l'approximation susmentionnée n'est véritablement valable qu'au voisinage de la ligne droite, lorsque la direction est peu, voire pas sollicitée.

*A contrario,* l'écart entre l'effort d'actionnement et l'effort de biellette réel est particulièrement prononcé, et donc l'approximation particulièrement inexacte, lors des inversions de braquage, c'est-à-dire lorsque le conducteur du véhicule change (volontairement) le sens dans lequel il actionne le volant de conduite, ce changement ayant pour but et pour effet de passer d'une situation de braquage vers la gauche, dans laquelle le conducteur exerce une force qui tire le volant vers la gauche, à une situation de braquage vers la droite, dans laquelle le conducteur exerce une force qui tire le volant vers la droite, ou inversement.

En outre, les inventeurs ont constaté que l'écart entre l'effort d'actionnement et l'effort de biellette réel pouvait être particulièrement sensible aux conditions de fonctionnement du mécanisme de direction, notamment aux conditions de température, ainsi qu'à l'état d'usure dudit mécanisme.

En pratique, toutes ces limitations peuvent donc réduire considérablement la disponibilité effective de la fonction d'évaluation de l'effort de biellette, voire rendre ladite évaluation de l'effort de biellette relativement hasardeuse.

Les objets assignés à l'invention visent par conséquent à remédier aux inconvénients susmentionnés et à proposer un nouveau procédé de détermination de l'effort de biellette qui permette de déterminer de façon fiable et précise, à tout moment, dans chaque situation de vie du véhicule, l'effort de biellette qui s'exerce sur un mécanisme de direction.

Les objets assignés à l'invention sont atteints au moyen d'un procédé de détermination d'un effort dit « effort de biellette » qui est représentatif de l'effort qu'exerce, à un instant considéré, l'environnement d'un véhicule sur un mécanisme de direction assistée qui équipe ledit véhicule et qui est manoeuvré au moins par un moteur d'assistance, ledit procédé comprenant :

- une étape (a) de détermination d'effort d'actionnement au cours de laquelle on détermine l'effort d'actionnement qui s'exerce à l'instant considéré sur le mécanisme de direction, tel que ledit effort d'actionnement résulte de l'effort d'assistance exercé par le moteur d'assistance sur le mécanisme de direction, et/ou de l'effort conducteur exercé par le conducteur du véhicule sur ledit mécanisme de direction,
- une étape (b) d'évaluation de frottement sec, au cours de laquelle on évalue l'effort de frottement sec qui s'exerce sur le mécanisme de direction à l'instant considéré,
- une étape (c) de calcul de l'effort de biellette qui comprend une sous-étape (c1) de sommation au cours de laquelle on calcule une expression représentative de l'effort de biellette, qui fait intervenir la somme algébrique de l'effort d'actionnement et de l'effort de frottement sec, et une sous-étape (c2) de filtrage au cours de laquelle on applique un filtre passe-bas, afin de pouvoir lisser le résultat de ladite expression lorsque ladite expression est calculée au moment d'une inversion de braquage du mécanisme de direction.

Avantageusement, la prise en considération du frottement sec dans l'évaluation de l'effort de biellette permet de déterminer ledit effort de biellette de façon bien plus précise qu'auparavant.

Les inventeurs ont en effet découvert que le frottement sec pouvait généralement expliquer une part significative, sinon la totalité, de l'écart constaté entre l'effort d'actionnement et l'effort de biellette réel.

Par conséquent, en corrigeant l'évaluation de l'effort de biellette de manière à ne pas (ne plus) négliger la composante d'effort lié au phénomène de frottement sec, composante qui peut être à l'origine d'un écart important entre l'effort d'actionnement et l'effort de biellette, on améliore la précision et la fiabilité de ladite évaluation dans la plupart, sinon la totalité, des situations de vie de véhicule, notamment dans toutes les situations de manoeuvre, quelles que soient la nature et l'intensité de la manoeuvre concernée, et en particulier lors des inversions de braquage.

Avantageusement, on remarquera que ce gain de précision s'opère tout en conservant une formule (expression) de calcul particulièrement simple, et rapide à mettre en oeuvre.

En outre, les inventeurs ont découvert que la sensibilité des méthodes connues de détermination de l'effort de biellette aux conditions de température de fonctionnement et d'usure était significativement attribuable à la sensibilité du frottement sec auxdites conditions de température et d'usure.

Par conséquent, ici encore, la prise en considération du frottement sec permet de gagner en précision.

Plus particulièrement, le fait d'évaluer ce frottement sec à l'instant choisi pour calculer l'effort de biellette, par exemple en réalisant une mesure de frottement ou bien en utilisant un modèle qui est actualisé au fil du temps à partir de données empiriques acquises au sein du mécanisme de direction, permet de tenir compte sensiblement en temps réel des évolutions du frottement sec dues aux facteurs de température et d'usure, et ainsi d'évaluer à tout moment, de manière fiable, un effort de biellette estimé qui est fidèlement représentatif de l'effort de biellette effectif qui s'exerce réellement sur le mécanisme de direction.

Ensuite, la mise en oeuvre d'un filtrage passe-bas permet de tenir compte de la dynamique physique du système de direction, et plus particulièrement de la dynamique liée à la durée (même infime) qui est nécessaire pour opérer le basculement de la valeur de frottement sec (c'est-à-dire à la durée qui est nécessaire pour opérer l'inversion de signe de ladite valeur de frottement) au moment des inversions de braquage, lorsque la vitesse de déplacement du mécanisme de direction (et en particulier du volant de conduite) s'inverse.

En effet, si le basculement de la valeur de frottement sec était perçu de façon "binaire", c'est-à-dire comme une apparente discontinuité, en raison notamment du fait que le calculateur qui gère le procédé conforme à l'invention procède par échantillonnage, alors ce basculement pourrait faire apparaître ponctuellement une divergence lors de l'exécution instantanée du calcul de l'expression représentative de l'effort de biellette.

Une telle divergence pourrait alors se traduire, en l'absence de filtre, par l'apparition d'un artéfact de type pic qui fausserait totalement l'évaluation de l'effort de biellette.

C'est pourquoi, l'utilisation d'un filtre passe-bas, dont la constante de temps est du même ordre de grandeur que la durée de basculement réel du frottement sec, permet avantageusement d'adoucir les effets des inversions de braquage sur le calcul de l'effort de biellette, par un lissage qui permet de maintenir en toutes circonstances le résultat de l'expression, c'est-à-dire l'effort de biellette calculé, au plus près de la valeur effective de l'effort de biellette réel.

Grâce au filtre passe-bas qui améliore la stabilité du calcul de l'effort de biellette, le procédé selon l'invention est donc particulièrement fiable dans toutes les situations de vie du véhicule, y compris lors des inversions de braquage et au voisinage de celles-ci.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, sur un diagramme temporel, l'évolution conjointe, lors d'une succession d'inversions de braquage, d'une part de l'effort d'actionnement qui correspond au cumul de l'effort d'assistance et de l'effort conducteur, d'autre part de l'effort de frottement sec évalué conformément à l'invention, ensuite de l'effort de biellette calculé selon le procédé conforme à l'invention, et enfin de l'effort de biellette réel.

La figure 2 représente une vue de détail agrandie d'une portion de la figure 1.

La figure 3 illustre, sur un diagramme qui exprime le frottement (en ordonnées) en fonction d'une variable (en abscisse) représentative de l'effort d'assistance, et plus particulièrement en fonction de l'effort d'actionnement total correspondant au cumul de l'effort d'assistance délivré par le moteur et de l'effort manuel exercé par le conducteur sur le volant de conduite, un exemple de modèle empirique de frottement sec obtenu à partir d'un nuage de points de caractérisation mesurés au fil du temps, et d'une loi de corrélation correspondante.

La figure 4 représente schématiquement la mise en oeuvre d'un procédé conforme à l'invention au sein d'un véhicule.

L'invention concerne un procédé de détermination d'un effort dit « effort de biellette » $F_{biellette}$ qui s'exerce au sein d'un mécanisme de direction assistée 1 équipant un véhicule, notamment un véhicule automobile.

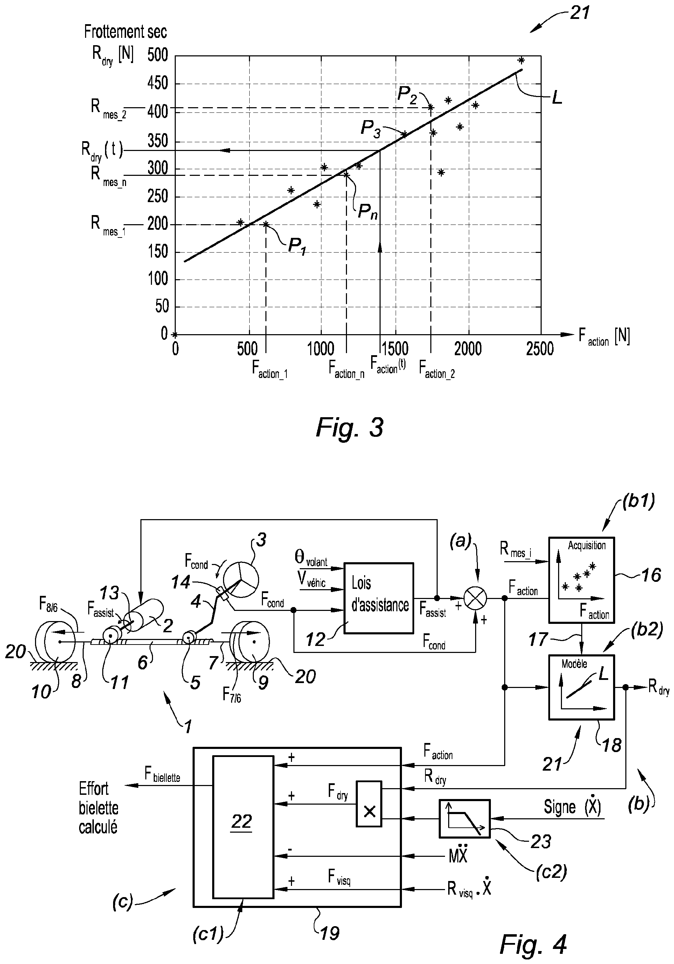

Tel que cela est illustré sur la figure 4, ledit mécanisme de direction 1 est manoeuvré par au moins un moteur d'assistance 2, capable de délivrer à cet effet un effort d'assistance $F_{assist}$ qui s'applique sur ledit mécanisme de direction 1.

On peut indifféremment envisager tout type de moteur d'assistance 2, et plus particulièrement tout type de moteur d'assistance à double sens de fonctionnement.

En particulier, l'invention peut tout aussi bien s'appliquer à un moteur d'assistance 2 rotatif, destiné à exercer un effort d'assistance $F_{assist}$ de type couple, qu'à un moteur d'assistance 2 linéaire, destiné à exercer un effort d'assistance $F_{assist}$ de type traction ou compression.

Par ailleurs, ledit moteur d'assistance 2 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 2 sera un moteur électrique rotatif, par exemple de type « brushless ».

Par ailleurs, tel que cela est illustré sur la figure 4, le mécanisme de direction assistée 1 comprend de préférence, de manière connue en soi, un volant de conduite 3 par lequel le conducteur du véhicule peut entraîner en rotation une colonne de direction 4 qui engrène, au moyen d'un pignon 5, sur une crémaillère de direction 6 montée coulissante dans un carter de direction solidaire du châssis du véhicule.

Les extrémités de la crémaillère de direction 6 sont de préférence reliées chacune, par l'intermédiaire d'une biellette de direction 7, 8, à un porte-fusée orientable en lacet, sur lequel est monté une roue directrice (et préférentiellement motrice) 9, 10 du véhicule, de telle manière que le déplacement de la crémaillère 6 en translation dans le carter provoque une modification de l'angle de braquage (i.e. de l'orientation en lacet) desdites roues directrices 9, 10.

Le moteur d'assistance 2 peut venir en prise sur la colonne de direction 4, par exemple par l'intermédiaire d'un réducteur à roue tangente et vis sans fin, ou bien encore venir en prise directement sur la crémaillère de direction 6, par un mécanisme d'entraînement de type vis à billes ou bien *via* un pignon moteur 11 distinct du pignon 5 de la colonne de direction (pour former par exemple un mécanisme de direction dit « à double pignon », tel que schématisé sur la figure 4).

La consigne d'effort (ou, plus préférentiellement, la consigne de couple, notée $F_{assist}$ sur la figure 4) qui est appliquée au moteur d'assistance 2 afin que ledit moteur assiste le conducteur dans la manoeuvre du mécanisme de direction 1 dépend de lois d'assistance prédéterminées, stockées dans une mémoire non volatile d'un calculateur (ici un module d'application de lois d'assistance 12), lesdites lois d'assistance pouvant ajuster ladite consigne d'effort en fonction de divers paramètres tels que l'effort (couple) volant $F_{cond}$ exercé par le conducteur sur le volant de conduite 3, la vitesse (longitudinale) $V_{véhic}$ du véhicule, la position angulaire $\theta_{volant}$ du volant de conduite 3, etc.

Par simple commodité de description, on considérera que la consigne d'effort appliquée au moteur d'assistance 2 reflète fidèlement l'effort d'assistance $F_{assist}$ délivré par ledit moteur d'assistance, et l'on assimilera donc les deux grandeurs l'une à l'autre.

Selon l'invention, l'effort de biellette $F_{biellette}$ correspond à l'effort qu'exerce, à un instant $\underline{t}$ considéré, l'environnement 20 du véhicule (c'est-à-dire typiquement la route 20 sur laquelle évolue ledit véhicule) sur le mécanisme de direction assistée 1 qui équipe ledit véhicule.

En pratique, en référence à l'exemple de la figure 4, ledit effort de biellette $F_{biellette}$ correspond en effet à la somme algébrique des efforts $F_{7/6}$ et $F_{8/6}$ qui sont exercés sur le mécanisme de direction, ici aux bornes de la crémaillère 6, d'une part par la biellette de direction gauche 7, qui transmet de fait à la crémaillère 6 (tel que le schématise l'effort $F_{7/6}$) l'effort résistant exercé par la route 20 sur la roue directrice gauche 9, et d'autre part par la biellette de direction droite 8, qui transmet à cette même crémaillère 6 (tel que le schématise l'effort $F_{8/6}$) l'effort résistant exercé par la route 20 sur la roue directrice droite 10 (l'une desdites biellettes 7, 8 travaillant, à un instant considéré, en traction, tandis que l'autre travaille en compression).

On notera que le procédé conforme à l'invention permet avantageusement d'estimer sensiblement en temps réel l'effort de biellette $F_{biellette}$, et donc de quantifier précisément et à tout moment l'action de la route 20 sur le train roulant directionnel, train roulant directionnel qui correspondra de préférence par ailleurs au train avant du véhicule.

Selon l'invention, le procédé comprend une étape (a) de détermination d'effort d'actionnement $F_{action}$ au cours de laquelle on détermine l'effort d'actionnement $F_{action}$ (total) qui s'exerce à l'instant considéré sur le mécanisme de direction 1, tel que ledit effort d'actionnement résulte de l'effort d'assistance $F_{assist}$ exercé par le moteur d'assistance 2 sur le mécanisme de direction 1, et/ou de l'effort conducteur $F_{cond}$ exercé (manuellement) par le conducteur du véhicule sur ledit mécanisme de direction 1 (ici *via* le volant de conduite 3).

On remarquera que, en pratique, l'effort d'actionnement $F_{action}$ pourra être égal au (seul) effort conducteur $F_{cond}$, en cas d'inaction du moteur d'assistance 2.

*A contrario,* l'effort d'actionnement $F_{action}$ pourra être égal au seul effort d'assistance $F_{assist}$ si l'effort conducteur $F_{cond}$ est nul, que ce soit parce que le conducteur a lâché le volant 3, par exemple pendant une manoeuvre automatique de la direction effectuée par le moteur d'assistance, telle qu'une manoeuvre d'assistance au stationnement, ou bien encore parce que le volant de conduite 3 sert simplement d'indicateur de cap et n'est pas relié mécaniquement à la crémaillère 6, de telle sorte que les efforts nécessaires aux manoeuvres de braquage sont assurés exclusivement par le moteur d'assistance 2.

Toutefois, par commodité de description, et au regard de l'exemple de mécanisme de direction 1 illustré sur la figure 4, on considérera dans ce qui suit que l'effort d'actionnement $F_{action}$, qui correspond à la résultante des différents efforts de manoeuvre qui sont appliqués volontairement sur le mécanisme de direction 1 pour modifier l'angle de braquage dudit mécanisme de direction ou pour maintenir l'angle de braquage dudit mécanisme à une valeur choisie, est égal à la somme (algébrique) des contributions respectives de l'effort conducteur $F_{cond}$ et de l'effort d'assistance $F_{assist}$.

Bien entendu, on pourra évaluer l'effort conducteur $F_{cond}$ et l'effort d'assistance $F_{assist}$ par tout moyen approprié.

De préférence, on pourra évaluer l'effort d'assistance $F_{assist}$ en mesurant (par exemple en sortie du module d'application des lois d'assistance 12) la consigne de couple appliquée au moteur d'assistance 2, ou bien encore en mesurant, au moyen d'un capteur de couple moteur placé sur l'arbre 13 du moteur d'assistance 2, l'effort d'assistance effectivement délivré par ledit moteur d'assistance.

L'effort conducteur $F_{cond}$, ou « couple volant », exercé par le conducteur sur le volant de conduite 3 pourra quant à lui être mesuré par un capteur de couple volant 14 approprié, tel qu'un capteur magnétique de couple mesurant les déformations élastiques d'une barre de torsion placée entre le volant de conduite 3 et la colonne de direction 4.

Selon l'invention, le procédé comprend également une étape (b) d'évaluation de frottement sec, au cours de laquelle on évalue l'effort de frottement sec $F_{dry}$, $R_{dry}$ qui s'exerce sur le mécanisme de direction 1 à l'instant $\underline{t}$ considéré.

Par « frottement sec » on désigne, par opposition au frottement visqueux qui est dépendant de (proportionnel à) la vitesse de déplacement du mécanisme, le frottement, non dépendant de la vitesse de glissement, qui est dû au contact surfacique (lubrifié ou non) entre deux solides, tel que décrit par la loi de Coulomb, et qui peut s'exprimer sous la forme : $F_{dry} = - R_{dry} \cdot signe(\dot{X})$, où $R_{dry}$ est la valeur dudit frottement sec et où $signe(\dot{X})$ représente le signe de la vitesse de déplacement du mécanisme de direction 1.

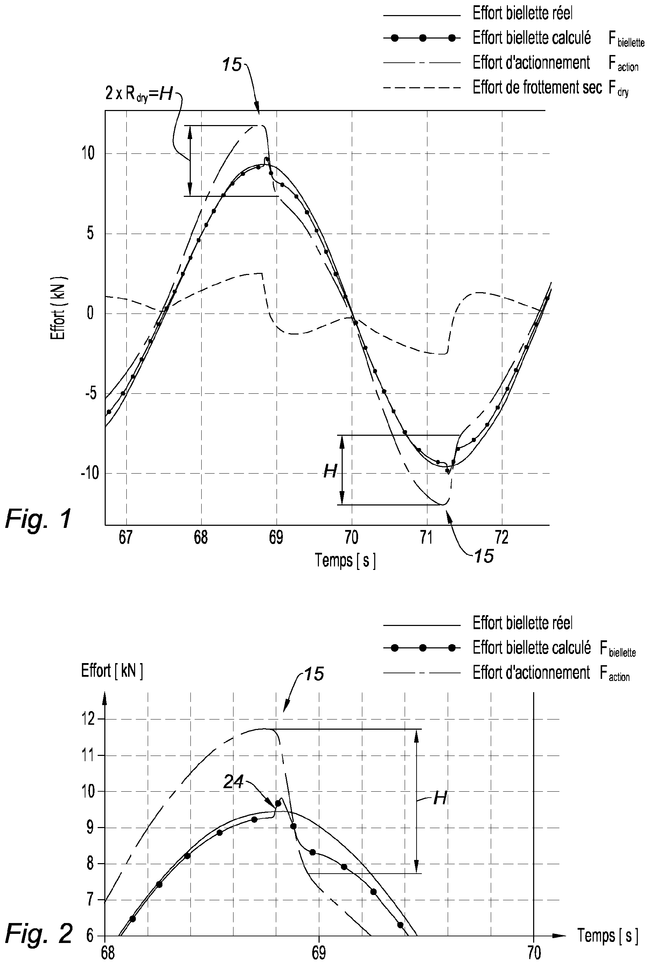

De préférence, l'effort de frottement sec $F_{dry}$, $R_{dry}$ est évalué à partir de la chute $\underline{H}$ de l'effort d'actionnement $F_{action}$, telle que cette chute $\underline{H}$ est observée lors d'inversions de braquage 15 du mécanisme de direction 1, ainsi que cela est notamment illustré sur les figures 1 et 2.

Ladite hauteur de chute $\underline{H}$ correspond sensiblement à la différence entre d'une part l'extremum (maximum, dit « valeur haute ») qu'atteint l'effort d'actionnement $F_{action}$ juste avant l'inversion de braquage 15, inversion de braquage 15 qui se traduit notamment par le passage du mécanisme 1 (et donc du volant 3) par une vitesse $\dot{X}$ nulle, et d'autre part la valeur (dite « valeur basse ») prise par ce même effort d'actionnement $F_{action}$ immédiatement après l'inversion de braquage 15.

Plus particulièrement, la valeur du frottement sec $R_{dry}$ correspondra avantageusement à la demi-hauteur de chute H/2.

En pratique, les inversions de braquage 15 successives pourront être par exemple détectées en calculant la dérivée temporelle première du signal représentatif de l'effort d'actionnement $F_{action}$ (ou, de manière sensiblement équivalente, du signal représentatif de l'effort d'assistance $F_{assist}$), et en détectant le passage de cette dérivée par un pic, caractérisé par le franchissement d'un seuil (d'amplitude de dérivée) prédéterminé.

La valeur haute et la valeur basse du signal d'effort d'actionnement $F_{action}$ qui délimitent (en ordonnées sur les figures 1 et 2) et caractérisent la hauteur de chute H, pourront être calculées au niveau de bornes temporelles (situées en abscisse sur lesdites figures 1 et 2) qui sont situées de part et d'autre de l'inversion de braquage, et qui correspondent respectivement à un premier instant de référence, qui précède, d'une durée prédéterminée, l'instant dit « instant de début de pic » qui caractérise le passage de la dérivée au-dessus du seuil, et à un second instant de référence qui suit, d'une durée prédéterminée, l'instant dit « instant de fin de pic » qui caractérise l'instant où la dérivée redescend sous ledit seuil. De manière alternative et sensiblement équivalente, le premier instant de référence et le second instant de référence pourront correspondre à des instants qui respectivement précèdent et suivent, chacun d'une durée prédéterminée, l'instant moyen auquel s'opère l'inversion de braquage, c'est-à-dire l'instant correspondant au centre (temporel) du pic de dérivée.

Par ailleurs, l'étape (b) d'évaluation du frottement sec $F_{dry}$, $R_{dry}$ est de préférence réalisée à partir d'un modèle empirique de frottement 21 qui est construit et rafraîchi au fil du temps par des mesures d'effort de frottement sec $R_{mes\_1}$, $R_{mes\_2}$, ... $R_{mes\_n}$ qui sont opérées successivement au fur et à mesure de l'utilisation du mécanisme de direction 1, par exemple (et de préférence) à chaque inversion de braquage 15.

Avantageusement, le modèle 21 qui sert à évaluer le frottement est ainsi automatiquement réactualisé au cours de l'utilisation du mécanisme de direction 1, et plus globalement au cours de l'utilisation (courante) du véhicule, si bien que ledit modèle 21 est réadapté en permanence à l'évolution des conditions dans lesquelles fonctionne le mécanisme de direction 1, et notamment à l'évolution des conditions de température ou de vieillissement (usure).

En utilisant ainsi un modèle de frottement 21 évolutif qui est périodiquement remis à jour, plutôt qu'une constante ou qu'un abaque invariant qui serait obtenu par un simple étalonnage d'origine effectué en usine, l'invention permet à l'estimation de frottement sec de refléter fidèlement l'état réel (par nature non constant) du frottement dans le mécanisme de direction 1, à tout instant t considéré, quel qu'il soit.

La précision du procédé s'en trouve donc accrue.

De préférence, l'étape (b) d'évaluation du frottement sec comprend une sous-étape (b1) d'acquisition d'une série de points de caractérisation, au cours de laquelle on mesure, pour plusieurs valeurs différentes prises successivement par l'effort d'actionnement $F_{action}$ au cours du fonctionnement du mécanisme de direction, les valeurs de frottement correspondantes, afin d'obtenir empiriquement une série de points de caractérisation $P_1$, $P_2$, ... $P_n$ distincts qui associent chacun à une valeur mesurée représentative de l'effort d'actionnement $F_{action\_1}$, $F_{action\_2}$, ... $F_{action\_n}$ une valeur mesurée de frottement sec $R_{mes\_1}$, $R_{mes\_2}$, ... $R_{mes\_n}$, puis une sous-étape (b2) de construction d'un modèle de frottement empirique 21, au cours de laquelle on établit une loi de corrélation $\underline{L}$ entre les points de caractérisation $P_1$, $P_2$, ... $P_n$ constitutifs de la série de points de caractérisation, à partir du nuage de points formé par ladite série desdits points de caractérisation.

Comme indiqué plus haut, les points de caractérisation pourront avantageusement être acquis lors des inversions de braquage 15.

Avantageusement, en créant un modèle de frottement 21 à partir d'un nuage de points pris en différentes valeurs (distinctes) d'efforts d'actionnement, plutôt que sur la base d'un seul point d'étalonnage, on obtient un modèle 21 qui couvre empiriquement une large plage de fonctionnement, et qui peut ainsi renseigner fidèlement sur le niveau de frottement sec $F_{dry}$ qui correspond à tout effort (tout couple) d'actionnement $F_{action}(t)$ considéré à un instant t donné, quelle que soit l'intensité dudit effort d'actionnement considéré.

En particulier, on pourra ainsi tenir compte, dans l'évaluation du frottement sec, du fait que la valeur du frottement sec $R_{dry}$ est, en pratique, une fonction croissante de l'effort (du couple) d'actionnement $F_{action}$.

Ici encore, l'invention permettra donc de gagner en précision dans la détermination du frottement sec, et donc, par voie de conséquence, dans la détermination de l'effort de biellette.

Avantageusement, l'étape (b1) d'acquisition de points de caractérisation et l'étape (b2) de construction de modèle 21 pourront être rafraîchies itérativement au cours du fonctionnement du mécanisme de direction 1, de telle manière que l'apprentissage permettant la construction du modèle sera permanent, et permettra donc de faire évoluer ledit modèle de manière glissante dans le temps (les points de caractérisation nouvellement acquis remplaçant progressivement les points de caractérisation les plus anciens, et la loi de corrélation $\underline{L}$ s'adaptant en conséquence).

A titre indicatif, la taille de la série de points de caractérisation $P_1$, $P_2$, ... $P_n$ pourra être comprise entre d'une part au moins 5 points de caractérisation, voire au moins 10 points de caractérisation $P_1$, $P_2$, ... $P_n$ et d'autre part 50, voire 100 points de caractérisation.

L'échantillon des points de caractérisation sera ainsi de taille suffisamment importante pour créer un modèle 21 fiable et représentatif, y compris en cas de survenance ponctuelle d'une mesure erronée.

Tel que cela a été détaillé plus haut, les points de caractérisation $P_1$, $P_2$, ... $P_n$ seront de préférence acquis lors d'inversions de braquage 15, la mesure de la valeur du frottement $R_{mes\_1}$, $R_{mes\_2}$, ... $R_{mes\_n}$ aux points de caractérisation $P_1$, $P_2$, ... $P_n$ étant obtenue à partir de la hauteur de chute $\underline{H}$ (et plus particulièrement de la demi-hauteur de chute H/2) du signal représentatif de l'effort d'actionnement Faction.

De préférence, la loi de corrélation $\underline{L}$ est établie sous forme d'une courbe d'interpolation (par exemple polynomiale) ou d'une courbe de régression par rapport à la série de points de caractérisation $P_1$, $P_2$, ... $P_n$.

De façon particulièrement préférentielle, tel que cela est illustré sur la figure 3, la loi de corrélation $\underline{L}$ est obtenue par régression linéaire sur la série de points de caractérisation $P_1$, $P_2$, ... $P_n$, par exemple par la méthode des moindres carrés.

On peut ainsi obtenir rapidement, et en ne mobilisant qu'une modeste puissance de calcul, un modèle 21 particulièrement bien représentatif du comportement réel du frottement sec.

En outre, on notera que l'utilisation d'une loi de corrélation $\underline{L}$ continue dont le domaine de définition et de validité s'étend, par extrapolation, au-delà des seuls points de caractérisation ayant servi à la construction du modèle 21, permet avantageusement d'associer à toute valeur de l'effort d'actionnement $F_{action}(t)$, mesurée (ou calculée) à l'instant $\underline{t}$, et ce y compris au-delà du domaine couvert par lesdits seuls points de caractérisation, une estimation de la valeur de frottement sec $R_{dry}$.

Selon l'invention, le procédé comprend une étape (c) de calcul de l'effort de biellette $F_{biellette}$ qui comprend une sous-étape (c1) de sommation au cours de laquelle on calcule une expression 22 représentative de l'effort de biellette, qui fait intervenir la somme algébrique de l'effort d'actionnement $F_{action}$ et de l'effort de frottement sec $F_{dry}$ : $F_{action} + F_{dry} = F_{cond} + F_{assist} + F_{dry}$, et une sous-étape (c2) de filtrage au cours de laquelle on applique un filtre passe-bas 23, afin de pouvoir lisser le résultat de ladite expression 22 (au moins) lorsque ladite expression est calculée au moment d'une inversion de braquage 15 du mécanisme de direction.

En effet, du fait qu'il existe, au niveau des contacts entre solides réels, une raideur de collage qui n'est pas infinie, le frottement sec réel n'évolue pas de façon discontinue lors des inversions de braquage 15, c'est-à-dire ne passe pas instantanément d'une valeur positive à une valeur négative opposée (ou inversement), mais obéit au contraire à une dynamique de transition certes rapide, mais néanmoins continue.

Or, ledit frottement sec $F_{dry}$ est modélisé ici par une expression $F_{dry} = -R_{dry} \cdot signe(\dot{X})$ qui est proportionnelle au signe $signe(\dot{X})$ de la vitesse de déplacement $\dot{X}$ du mécanisme de direction 1.

En pratique, on pourra considérer comme valeur représentative de la vitesse de déplacement $\dot{X}$ la vitesse du moteur d'assistance 2, c'est-à-dire la vitesse angulaire de rotation de l'arbre 13 dudit moteur d'assistance 2, qui est connue très précisément.

Le signal $signe(\dot{X})$ qui mesure le signe de la vitesse de déplacement du mécanisme de direction (et qui reflète donc, en pratique, le sens de rotation de l'arbre 13 du moteur d'assistance) est, par nature, binaire (le signe de la vitesse étant soit positif, soit négatif).

De ce fait, si ledit signal $signe(\dot{X})$ est obtenu ou traité de façon brute, sous forme numérique, par un échantillonnage discret, un changement de signe de la vitesse de déplacement du mécanisme de direction 1 sera perçu sous forme d'un basculement instantané de la valeur binaire dudit signal $signe(\dot{X})$, basculement qui s'opérera instantanément au moment du rafraîchissement du signal qui suivra immédiatement l'instant ou la vitesse est passée par zéro.

Or, un tel basculement instantané aurait pour effet d'introduire une discontinuité (un pic) dans l'évaluation du frottement, et donc, par conséquent, dans le calcul de l'effort de biellette.

Ici, avantageusement, l'adjonction du filtre passe-bas 23 permet d'introduire artificiellement une limitation dynamique dans le signal $signe(\dot{X})$ qui mesure le signe de la vitesse de déplacement du mécanisme de direction, limitation dynamique qui agit sur (en complément de) la perception binaire du changement de signe de manière à créer, dans ledit signal $signe(\dot{X})$ ainsi filtré, lors d'un changement de signe, une transition continue qui reproduit la dynamique physique réelle du phénomène d'inversion.

En d'autres termes, le filtrage passe-bas 23 permet de rétablir la progressivité de l'inversion du frottement, telle que cette inversion est perçue par le calculateur qui gère le procédé selon l'invention, en évitant ainsi que le procédé de traitement ne génère de lui-même une discontinuité qui se traduirait, faussement, par un pic de frottement (et donc un pic d'effort de biellette) sans cause matérielle véritable.

Concrètement, tel que cela est bien visible sur la figure 2, le filtrage passe-bas 23, même s'il est pas absolument parfait en ceci qu'il peut laisser subsister une légère perturbation résiduelle 24 (un pic amorti) dans l'effort de biellette $F_{biellette}$ calculé, au moment de l'inversion de braquage 15, n'en permet pas moins de maintenir l'amplitude de ladite perturbation résiduelle 24 bien en-deçà de l'écart observé entre l'effort biellette réel et l'effort d'actionnement $F_{action}$, c'est-à-dire, graphiquement, de maintenir en permanence la courbe d'effort de biellette calculé (apparaissant en pointillés sur la figure 2) bien plus proche de la courbe d'effort de biellette réel (apparaissant en trait continu sur cette même figure 2) que ne l'est la courbe représentative de l'effort d'actionnement $F_{action}$ (représentée en trait mixte sur ladite figure 2).

On notera que, *a contrario,* en l'absence de filtrage, la courbe d'effort de biellette calculé pourrait, au moment des inversions de braquage 15, présenter un pic qui l'éloignerait de la courbe d'effort de biellette réel plus loin que ne l'est la courbe représentative de l'effort d'actionnement, c'est-à-dire que, dans ce cas, la valeur d'effort de biellette calculé $F_{biellette}$ serait (temporairement) encore moins fiable que si ladite valeur d'effort de biellette avait été simplement considérée comme égale à la valeur d'effort d'actionnement $F_{action}$.

On constate donc que l'utilisation du filtre passe-bas 23 selon l'invention permet de déterminer en toutes circonstances l'effort de biellette calculé $F_{biellette}$ avec une précision bien supérieure aux procédés antérieurement connus, et ce y compris au moment - critique - de l'inversion de braquage 15.

Plus globalement, il est remarquable que le fait de combiner, selon l'invention, d'une part une prise en considération du frottement sec et d'autre part l'utilisation d'un filtre passe-bas 23 (amortisseur de pics) permet de rapprocher au plus près de l'effort de biellette réel l'effort de biellette estimé par le calcul, et de maintenir cette proximité (cette cohésion entre les courbes) en toutes circonstances, y compris (notamment) au voisinage des zones d'inversion de braquage 15 (dans lesquelles le filtre permet d'atténuer significativement les effets de la discontinuité du signal brut reflétant le signe de la vitesse de déplacement).

De préférence, tel que cela est illustré sur la figure 4, le filtrage passe-bas interviendra sur le signal $signe(\dot{X})$ représentatif du signe de la vitesse de déplacement du mécanisme de direction 1, en amont du calcul (c1) de l'expression 22, et même en amont du calcul du frottement sec $F_{dry}$ (qui consiste ici à multiplier le signe de la vitesse $signe(\dot{X})$ par la valeur de frottement sec $R_{dry}$), ce qui permet notamment de rétablir la dynamique de transition continue "à la source", directement dans le signal (de signe de vitesse) concerné, en "entrée » de l'expression 22.

Toutefois, on pourrait également envisager d'opérer ce filtrage passe-bas 23 plus en aval, par exemple sur le signal de frottement sec $F_{dry}$ issu du produit $F_{dry} = - R_{dry} \cdot signe(\dot{X})$, voire sur l'expression 22, après calcul (c1) de cette dernière, c'est-à-dire en "sortie" de ladite expression 22.

Préférentiellement, la constante de temps du filtre passe-bas 23 est comprise entre 0,05 s et 0,5 s, et de préférence entre 0,1 s (100 millisecondes) et 0,3 s (300 millisecondes), par exemple sensiblement égale à 0,15 s (150 millisecondes).

Avantageusement, ces ordres de grandeur correspondent sensiblement à la durée caractéristique de la dynamique de basculement réel du frottement sec, c'est-à-dire de la transition continue dudit frottement sec, telle qu'elle est observée lors des inversions de braquage 15.

Le filtre passe-bas 23 pourra ainsi reproduire une dynamique artificielle réaliste, proche de la dynamique de transition réelle.

Par ailleurs, au cours de l'étape (c) de calcul de l'effort de biellette, on peut de préférence également prendre en considération l'effort de frottement visqueux $F_{visq}$ qui affecte le déplacement du mécanisme de direction 1, et qui est proportionnel à la vitesse de déplacement $\dot{X}$ dudit mécanisme de direction.

Bien que la contribution de ce terme de frottement visqueux $F_{visq}$ ne soit pas prépondérante, mais au contraire plutôt accessoire, au regard des contributions de l'effort d'actionnement $F_{action}$ et du frottement sec $F_{dry}$, sa prise en considération permet néanmoins d'améliorer encore la précision du calcul de l'effort de biellette $F_{biellette}$.

Concrètement, ce frottement visqueux pourra s'exprimer sous la forme $F_{visq} = - R_{visq} \cdot \dot{X}$ où $R_{visq}$ est le coefficient de frottement visqueux et où $\dot{X}$ représente la vitesse de déplacement du mécanisme de direction.

Le coefficient de frottement visqueux $R_{visq}$ pourra être prédéterminé par une campagne d'essais et stocké sous forme d'un abaque dans une mémoire non volatile du calculateur gérant le procédé.

La vitesse de déplacement pourra par exemple être calculée, par un calcul de dérivée temporelle, à partir d'un capteur de position capable de mesurer la position angulaire du volant de conduite 3, la position linéaire de la crémaillère 6, ou bien encore la position angulaire de l'arbre 13 du moteur d'assistance.

De manière analogue, au cours de l'étape (c) de calcul de l'effort de biellette, on pourra également prendre en considération l'effort inertiel $M \cdot \ddot{X}$ qui s'exerce sur le mécanisme de direction 1.

Ici encore, bien qu'il s'agisse d'un terme dont la contribution est généralement plutôt accessoire au regard des contributions de l'effort d'actionnement $F_{action}$ et du frottement sec $F_{dry}$, sa prise en considération permettra néanmoins d'améliorer encore la précision du calcul de l'effort de biellette $F_{biellette}$.

Concrètement, ledit effort inertiel pourra être calculé en faisant le produit de la masse (mobile) $\underline{M}$ - connue - du mécanisme de direction par son accélération instantanée $\ddot{X}$, laquelle pourra par exemple être obtenue par dérivation de la vitesse $\dot{X}$.

En pratique, l'inertie du moteur d'assistance 2 étant très largement supérieure à celle des autres organes mobiles du mécanisme de direction 1 (tels que la crémaillère 6), on pourra, en première approximation (réaliste) considérer uniquement la masse et l'accélération de l'arbre 13 du moteur d'assistance 2 pour évaluer l'effort inertiel $M \cdot \ddot{X}$.

En définitive, l'expression 22 représentative de l'effort de biellette sera de préférence donnée par : $F_{biellette} = F_{cond} + F_{assist} + F_{dry} + F_{visq} - M \cdot \ddot{X}$, avec :

- $F_{biellette}$ l'effort de biellette,
- $F_{cond}$ l'effort conducteur,
- $F_{assist}$ l'effort d'assistance,
- $F_{dry}$ le frottement sec, avec $F_{dry} = -R_{dry} \cdot signe(\dot{X})$, où $R_{dry}$ est la valeur du frottement sec et où $signe(\dot{X})$ représente le signe de la vitesse de déplacement du mécanisme de direction,
- $F_{visq}$ le frottement visqueux, avec $F_{visq} = -R_{visq} \cdot \dot{X}$, où $R_{visq}$ est le coefficient de frottement visqueux et où $\dot{X}$ représente la vitesse de déplacement du mécanisme de direction,
- $M \cdot \ddot{X}$ l'effort inertiel qui dépend de la masse mobile $M\,du$ mécanisme de direction et de l'accélération instantanée $\ddot{X}$ dudit mécanisme de direction.

Comme indiqué plus haut, la valeur de frottement sec $R_{dry}$ est de préférence obtenue à partir d'un modèle 21, et est de préférence une fonction croissante (qui suit typiquement la droite de régression $\underline{L}$ mentionnée plus haut) de l'effort d'actionnement : $R_{dry} = f(F_{assist} + F_{cond})$.

On notera que l'expression représentative de l'effort de biellette ci-dessus correspond à l'application du principe fondamental de la dynamique aux bornes du mécanisme de direction 1.

On notera également que les termes prépondérants (et donc suffisants à eux seuls pour obtenir un résultat représentatif de l'effort de biellette réel) de cette expression 22 sont, en première approximation, l'effort d'actionnement ($F_{assist}$ + $F_{cond}$) et l'effort de frottement sec $F_{dry}$.

Bien entendu, les fonctions assignées au procédé selon l'invention pourront être réalisées par des modules de calcul idoines, et plus particulièrement par un module d'application de loi d'assistance 12, un module d'acquisition (de points de caractérisation) 16, un module de construction de modèle (module de calcul de la loi de corrélation L) 17, et un module d'évaluation de frottement 18 (appliquant la loi de corrélation L ainsi définie pour estimer, à tout moment et pour toute valeur quelconque de l'effort d'actionnement $C_{action}$(t), la valeur de frottement $R_{dry}$(t) correspondante), un module 19 de calcul d'effort de biellette $F_{biellette}$ et un module de filtrage (ou « filtre ») passe-bas 23.

Chacun des modules susmentionnés pourra être formé par un circuit électronique, une carte électronique, un calculateur (ordinateur), un automate programmable, ou tout autre dispositif équivalent, agencé de préférence pour traiter les signaux utiles au procédé sous forme numérique (discrète).

Chacun des modules susmentionnés pourra présenter une structure de commande physique, liée au câblage de ses composants électroniques, et/ou, de préférence, une structure de commande virtuelle, définie par une programmation informatique.

Bien entendu, l'invention concerne également en tant que tel tout support de données lisible par un ordinateur et contenant des éléments de code de programme informatique permettant d'exécuter le procédé conforme à l'invention lorsque ledit support est lu par un ordinateur.

Elle concerne également un système de direction assistée comprenant un mécanisme de direction assistée 1 piloté par un module de gestion incluant tout ou partie des modules susmentionnés, et de ce fait capable de mettre en oeuvre le procédé selon l'invention.

Elle concerne en outre un véhicule automobile, notamment à roues directrices 9, 10, éventuellement motrices, équipé d'un tel système de direction assistée.

On notera enfin que le procédé conforme à l'invention, qui exploite des signaux généralement disponibles au sein des directions assistée, peut être facilement généralisé à toutes les directions assistées, y compris en rattrapage sur de nombreuses directions assistées déjà existantes, par une simple reprogrammation de leur calculateur.

Bien entendu, l'invention n'est par ailleurs nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

## Revendications

1. Procédé de détermination d'un effort dit « effort de biellette » ($F_{biellette}$) qui est représentatif de l'effort qu'exerce, à un instant considéré, l'environnement (20) d'un véhicule sur un mécanisme de direction assistée (1) qui équipe ledit véhicule et qui est manoeuvré au moins par un moteur d'assistance (2), ledit procédé comprenant :

   - une étape (a) de détermination d'effort d'actionnement au cours de laquelle on détermine l'effort d'actionnement ($F_{action}$) qui s'exerce à l'instant considéré sur le mécanisme de direction (1), tel que ledit effort d'actionnement résulte de l'effort d'assistance ($F_{assist}$) exercé par le moteur d'assistance (2) sur le mécanisme de direction (1), et/ou de l'effort conducteur ($F_{cond}$) exercé par le conducteur du véhicule sur ledit mécanisme de direction (1),
   - une étape (b) d'évaluation de frottement sec, au cours de laquelle on évalue l'effort de frottement sec ($F_{dry}$, $R_{dry}$) qui s'exerce sur le mécanisme de direction à l'instant considéré,
   - une étape (c) de calcul de l'effort de biellette ($F_{biellette}$) qui comprend une sous-étape (c1) de sommation au cours de laquelle on calcule une expression (22) représentative de l'effort de biellette, qui fait intervenir la somme algébrique de l'effort d'actionnement ($F_{action}$) et de l'effort de frottement sec ($F_{dry}$), et une sous-étape (c2) de filtrage au cours de laquelle on applique un filtre passe-bas (23), afin de pouvoir lisser le résultat de ladite expression (22) lorsque ladite expression est calculée au moment d'une inversion de braquage (15) du mécanisme de direction.

2. Procédé selon la revendication 1 **caractérisé en ce que** la constante de temps du filtre passe-bas (23) est comprise entre 0,05 s et 0,5 s, et de préférence entre 0,1 s et 0,3 s.

3. Procédé selon la revendication 1 ou 2 **caractérisé en ce que** l'effort de frottement sec ($F_{dry}$, $R_{dry}$) est évalué à partir de la chute (H) de l'effort d'actionnement ($F_{action}$) observée lors d'inversions de braquage (15) du mécanisme de direction.

4. Procédé selon l'une des revendications précédentes **caractérisé en ce que** l'étape (b) d'évaluation du frottement sec est réalisée à partir d'un modèle empirique de frottement (21) qui est construit et rafraîchi au fil du temps par des mesures d'effort de frottement sec ($R_{mes\_1}$, $R_{mes\_2}$, ... $R_{mes\_n}$) qui sont opérées successivement au fur et à mesure de l'utilisation du mécanisme de direction (1), par exemple à chaque inversion de braquage (15).

**5.** Procédé selon l'une des revendications précédentes **caractérisé en ce que** l'étape (b) d'évaluation du frottement sec comprend une sous-étape (b1) d'acquisition d'une série de points de caractérisation, au cours de laquelle on mesure, pour plusieurs valeurs différentes prises successivement par l'effort d'actionnement ($F_{action}$) au cours du fonctionnement du mécanisme de direction (1), les valeurs de frottement sec correspondantes, afin d'obtenir empiriquement une série de points de caractérisation ($P_1$, $P_2$, ... $P_n$) distincts qui associent chacun à une valeur mesurée représentative de l'effort d'actionnement ($F_{action\_1}$, $F_{action\_2}$, ... $F_{action\_n}$) une valeur mesurée de frottement sec ($R_{mes\_1}$, $R_{mes\_2}$, ... $R_{mes\_n}$), puis une sous-étape (b2) de construction d'un modèle de frottement empirique (21), au cours de laquelle on établit une loi de corrélation (L) entre les points de caractérisation ($P_1$, $P_2$, ... $P_n$) constitutifs de la série de points de caractérisation, à partir du nuage de points formé par ladite série desdits points de caractérisation.

**6.** Procédé selon l'une des revendications précédentes **caractérisé en ce que**, au cours de l'étape (c) de calcul de l'effort de biellette, on prend également en considération l'effort de frottement visqueux ($F_{visq}$) qui affecte le déplacement du mécanisme de direction, et qui est proportionnel à la vitesse de déplacement ($\dot{X}$) dudit mécanisme de direction (1).

**7.** Procédé selon l'une des revendications précédentes **caractérisé en ce que**, au cours de l'étape (c) de calcul de l'effort de biellette, on prend également en considération l'effort inertiel ($M \cdot \ddot{X}$) qui s'exerce sur le mécanisme de direction (1).

**8.** Procédé selon l'une des revendications précédentes **caractérisé en ce que** l'expression (22) représentative de l'effort de biellette est donnée par :

$$F_{biellette} = F_{cond} + F_{assist} + F_{dry} + F_{visq} - M \cdot \ddot{X} ,$$

avec :

- $F_{biellette}$ l'effort de biellette,
- $F_{cond}$ l'effort conducteur,
- $F_{assist}$ l'effort d'assistance,
- $F_{dry}$ le frottement sec, avec $F_{dry} = -R_{dry} \cdot signe(\dot{X})$, où $R_{dry}$ est la valeur du frottement sec, de préférence obtenue à partir d'un modèle et de préférence fonction croissante de l'effort d'actionnement : $R_{dry} = f(F_{assist} + F_{cond})$, et où $signe(\dot{X})$ représente le signe de la vitesse de déplacement du mécanisme de direction (1),
- $F_{visq}$ le frottement visqueux, avec $F_{visq} = - R_{visq} \cdot \dot{X}$, où $R_{visq}$ est le coefficient de frottement visqueux et où $\dot{X}$ représente la vitesse de déplacement du mécanisme de direction (1),
- $M \cdot \ddot{X}$ l'effort inertiel qui dépend de la masse mobile $M$ du mécanisme de direction (1) et de l'accélération instantanée $\ddot{X}$ dudit mécanisme de direction (1).

**Patentansprüche**

**1.** Verfahren zum Bestimmen einer "Schwingarmkraft" ($F_{biellette}$) genannten Kraft, die für die Kraft repräsentativ ist, welche die Umgebung (20) eines Fahrzeugs zu einem gegebenen Zeitpunkt auf einen Servolenkungsmechanismus (1) ausübt, mit dem das Fahrzeug ausgestattet ist und der über mindestens einen Servomotor (2) angetrieben wird, wobei das Verfahren umfasst:

- einen Schritt (a) des Bestimmens der Betätigungskraft, in dessen Laufe die Betätigungskraft ($F_{action}$), die zum gegebenen Zeitpunkt auf den Lenkungsmechanismus (1) einwirkt, so bestimmt wird, wie die Betätigungskraft aus der vom Servomotor (2) auf den Lenkungsmechanismus (1) ausgeübten Servokraft ($F_{assist}$) und/oder aus der vom Fahrer des Fahrzeugs auf den Lenkungsmechanismus (1) ausgeübten Fahrerkraft ($F_{cond}$) resultiert,
- einen Schritt (b) des Bewertens der Trockenreibung, in dessen Laufe die Trockenreibungskraft ($F_{dry}$, $R_{dry}$) bewertet wird, die zum gegebenen Zeitpunkt auf den Lenkungsmechanismus einwirkt,
- einen Schritt (c) des Berechnens der Schwingarmkraft ($F_{biellette}$), der einen Unterschritt (c1) des Summierens umfasst, in dessen Laufe ein für die Schwingarmkraft repräsentativer Ausdruck (22) berechnet wird, der die algebraische Summe der Betätigungskraft ($F_{action}$) und der Trockenreibungskraft ($F_{dry}$) zum Einsatz bringt, und einen Unterschritt (c2) des Filterns, in dessen Laufe ein Tiefpassfilter (23) angewendet wird, um das Ergebnis des Ausdrucks (22) glätten zu können, wenn der Ausdruck zum Zeitpunkt einer Lenkrichtungsumkehrung (15) des Lenkungsmechanismus berechnet wird.

2. Verfahren nach Anspruch 1, **dadurch gekennzeichnet, dass** die Zeitkonstante des Tiefpassfilters (23) im Bereich zwischen 0,05 s und 0,5 s, und vorzugsweise zwischen 0,1 s und 0,3 s beträgt.

3. Verfahren nach Anspruch 1 oder 2, **dadurch gekennzeichnet, dass** die Trockenreibungskraft ($F_{dry}$, $R_{dry}$) ausgehend vom Rückgang (H) der Betätigungskraft ($F_{action}$) bewertet wird, die bei Lenkrichtungsumkehrungen (15) des Lenkungsmechanismus beobachtet wird.

4. Verfahren nach einem der vorstehenden Ansprüche, **dadurch gekennzeichnet, dass** der Schritt (b) des Bewertens der Trockenreibung ausgehend von einem empirischen Reibungsmodell (21) ausgeführt wird, das mit der Zeit über Messungen der Trockenreibungskraft ($R_{mes\_1}$, $R_{mes\_2}$, ... $R_{mes\_n}$) aufgebaut und erneuert wird, die nacheinander im Zuge der Verwendung des Lenkungsmechanismus (1), zum Beispiel bei jeder Lenkungsrichtungsumkehrung (15), vorgenommen werden.

5. Verfahren nach einem der vorstehenden Ansprüche, **dadurch gekennzeichnet, dass** der Schritt (b) des Bewertens der Trockenreibung einen Unterschritt (b1) des Erfassens einer Reihe von Charakterisierungspunkten umfasst, in dessen Laufe für mehrere verschiedene Werte, die nacheinander im Laufe des Betriebs des Lenkungsmechanismus (1) von der Betätigungskraft ($F_{action}$) genommen werden, die entsprechenden Trockenreibungswerte gemessen werden, um empirisch eine Reihe von einzelnen Charakterisierungspunkten ($P_1$, $P_2$, ... $P_n$) zu erhalten, die jeder einen für die Betätigungskraft ($F_{action\_1}$, $F_{action\_2}$, ... $F_{action\_n}$) repräsentativen Messwert mit einem Trockenreibungsmesswert ($R_{mes\_1}$, $R_{mes\_2}$, ... $R_{mes\_n}$) verknüpfen, und danach einen Unterschritt (b2) des Aufbauens eines empirischen Reibungsmodells (21), in dessen Laufe ein Korrelationsgesetz (L) zwischen den Charakterisierungspunkten ($P_1$, $P_2$, ... $P_n$), aus denen die Reihe von Charakterisierungspunkten besteht, ausgehend von der Punktewolke aufgestellt wird, welche von der Reihe der Charakterisierungspunkte gebildet wird.

6. Verfahren nach einem der vorstehenden Ansprüche, **dadurch gekennzeichnet, dass** im Laufe des Schritts (c) des Berechnens der Schwingarmkraft ebenfalls die Flüssigkeitsreibungskraft ($F_{visq}$) berücksichtigt wird, die sich auf die Bewegung des Lenkungsmechanismus auswirkt und die zur Bewegungsgeschwindigkeit ($\dot{X}$) des Lenkungsmechanismus (1) proportional ist.

7. Verfahren nach einem der vorstehenden Ansprüche, **dadurch gekennzeichnet, dass** im Laufe des Schritts (c) des Berechnens der Schwingarmkraft ebenfalls die Trägheitskraft ($M \cdot \ddot{X}$) berücksichtigt wird, die auf den Lenkungsmechanismus (1) einwirkt.

8. Verfahren nach einem der vorstehenden Ansprüche, **dadurch gekennzeichnet, dass** der für die Schwingarmkraft repräsentative Ausdruck (22) wiedergegeben wird durch:

$$F_{biellette} = F_{cond} + F_{assist} + F_{dry} + F_{visq} - M \cdot \ddot{X},$$

wobei:

- $F_{biellette}$ die Schwingarmkraft,
- $F_{cond}$ die Fahrerkraft,
- $F_{assist}$ die Servokraft,
- $F_{dry}$ die Trockenreibung, wobei $F_{dry} = - R_{dry} \cdot Vorzeichen(\dot{X})$, worin $R_{dry}$ der Trockenreibungswert, vorzugsweise ausgehend von einem Modell erhalten und vorzugsweise steigende Funktion der Betätigungskraft : $R_{dry} = f(F_{assist} + F_{cond})$ ist, und worin $Vorzeichen(\dot{X})$ für das Vorzeichen der Bewegungsgeschwindigkeit des Lenkungsmechanismus (1) steht,
- $F_{visq}$ die Flüssigkeitsreibung, wobei $F_{visq} = - R_{visq} \cdot \dot{X}$, worin $R_{visq}$ der Flüssigkeitsreibungskoeffizient ist, und worin $\dot{X}$ für die Bewegungsgeschwindigkeit des Lenkungsmechanismus (1) steht,
- $M \cdot \ddot{X}$ die Trägheitskraft, die von der Schwungmasse $M$ des Lenkungsmechanismus (1) und von der momentanen Beschleunigung $\ddot{X}$ des Lenkungsmechanismus (1) abhängt.

**Claims**

1. A method for determining a force called « tie-rod force » ($F_{biellette}$) which is representative of the force exerted, at a considered instant, by the environment (20) of a vehicle on a power steering mechanism (1) which equips said vehicle and which is maneuvered at least by an assistance motor (2), said method comprising:

   - a step (a) of determining an actuating force during which the actuating force ($F_{action}$) exerted at the considered instant on the steering mechanism (1) is determined, such that said actuating force results from the assistance force ($F_{assist}$) exerted by the assistance motor (2) on the steering mechanism (1), and/or the driver force ($F_{cond}$) exerted by the driver of the vehicle on said steering mechanism (1),
   - a step (b) of assessing the dry friction, during which the dry friction force ($F_{dry}$, $R_{dry}$), which is exerted on the steering mechanism at the considered instant is assessed,
   - a step (c) of calculating the tie-rod force ($F_{biellette}$) which comprises a summing sub-step (c1) during which an expression (22) representative of the tie-rod force is calculated, wherein said expression involves the algebraic sum of the actuating force ($F_{action}$) and the dry friction force ($F_{dry}$), and a filtering sub-step (c2) during which a low-pass filter (23) is applied, in order to be able to smooth the result of said expression (22) when said expression is calculated at the moment of a steering reversal (15) of the steering mechanism.

2. The method according to claim 1, **characterized in that** the time constant of the low-pass filter (23) is comprised between 0.05 s and 0.5 s, and preferably between 0.1 s and 0.3 s.

3. The method according to claim 1 or 2, **characterized in that** the dry friction force ($F_{dry}$, $R_{dry}$) is assessed from the drop ($H$) of the actuating force ($F_{action}$) observed during steering reversals (15) of the steering mechanism.

4. The method according to any of the preceding claims, **characterized in that** step (b) of assessing the dry friction is carried out from an empirical friction model (21) which is constructed and refreshed over time by measurements of dry friction force $R_{mes\_1}$, $R_{mes\_2}$ ... $R_{mes\_n}$ which are operated successively as and when using the steering mechanism (1), for example at each steering reversal (15).

5. The method according to any of the preceding claims, **characterized in that** step (b) of assessing the dry friction comprises a sub-step (b1) of acquiring a series of characterization points, during which the corresponding friction values are measured for several different values taken successively by the actuating force ($F_{action}$) during the operation of the steering mechanism (1), in order to obtain empirically a series of distinct characterization points ($P_1$, $P_2$,... $P_n$) which associate each, to a measured value representative of the actuating force ($F_{action\_1}$, $F_{action\_2}$,... $F_{action\_n}$), a measured value of dry friction ($R_{mes\_1}$, $R_{mes\_2}$ ... $R_{mes\_n}$), then a sub-step (b2) of constructing an empirical friction model (21), during which a correlation law $\underline{L}$ is established between the characterization points ($P_1$, $P_2$,... $P_n$) constituting the series of characterization points, from the scatter chart formed by said series of said characterization points.

6. The method according to any of the preceding claims, **characterized in that**, during step (c) of calculating the tie-rod force, it is also taken in consideration the viscous friction force ($F_{visq}$) which affects the movement of the steering mechanism, and which is proportional to the speed of movement ($\dot{X}$) of said steering mechanism (1).

7. The method according to any of the preceding claims, **characterized in that**, during step (c) of calculating the tie-rod force, it is also taken in consideration the inertial force ($M.\ddot{X}$) which is exerted on the steering mechanism (1).

8. The method according to any of the preceding claims, **characterized in that** the expression (22) representative of the tie-rod force will be preferably given by:

$$F_{biellette} = F_{cond} + F_{assist} + F_{dry} + F_{visq} - M.\ddot{X},$$

with:

   - $F_{biellette}$ the tie-rod force,
   - $F_{cond}$ the driver force,
   - $F_{assist}$ the assistance force,
   - $F_{dry}$ the dry friction, with $F_{dry} = - R_{dry} \cdot signe(\dot{X})$, where $R_{dry}$ is the value of the dry friction, preferably obtained from a model and preferably an increasing function of the actuating force: $R_{dry} = f(F_{assist} + F_{cond})$, and where $signe(\dot{X})$ represents the sign of the speed of movement of the steering mechanism (1),

- $F_{visq}$ the viscous friction with $F_{visq} = -R_{visq} \cdot \dot{X}$, where $R_{visq}$ is the viscous friction coefficient and where $X$ represents the speed of movement of the steering mechanism (1),

- $M.\ddot{X}$ the inertial force which depends on the movable mass M of the steering mechanism (1) and the instantaneous acceleration $\ddot{X}$ of said steering mechanism (1).

Fig. 1

Fig. 2

Fig. 3

Fig. 4

**EP 3 166 839 B1**

## RÉFÉRENCES CITÉES DANS LA DESCRIPTION

### Documents brevets cités dans la description

- DE 102011052881 A1